# EUROPÄISCHE PATENTSCHRIFT

(11) **EP 1 298 299 B1**
(45) Veröffentlichungstag und Bekanntmachung des Hinweises auf die Patenterteilung: **01.10.2008**
(21) Anmeldenummer: 02015158.5
(22) Anmeldetag: 06.07.2002
(51) Int. Cl.: F02D 9/10, F16K 27/02

(54) **Variantenreduzierte Drosseleinrichtung mit austauschbaren Gehäuseteilen**
Throttle device with interchangeable casing parts
Dispositif d'étranglement avec des éléments de boîtiers échangeables

(30) Priorität: 26.09.2001 DE 10147333
(43) Veröffentlichungstag der Anmeldung: 02.04.2003
(73) Patentinhaber: ROBERT BOSCH GMBH, 70442 Stuttgart (DE)
(72) Erfinder: Meiwes, Johannes, 71706 Markgroeningen (DE); Josten, Stefan, 42897 Remscheid (DE)
(74) Vertreter: Hörschler, Wolfram Johannes

(56) Entgegenhaltungen:
- EP-A- 0 668 816
- WO-A-96/07041
- DE-A- 4 329 522
- US-A- 5 482 019

## Beschreibung

### Technisches Gebiet

Im Ansaugtrakt von Verbrennungskraftmaschinen kommen heute Drosselvorrichtungen zum Einsatz, die ein Aluminiumgehäuse enthalten. Je nach Typ der Verbrennungskraftmaschine, an dem die Drosselvorrichtung eingesetzt wird, ist eine entsprechende Variante einer Drosselvorrichtung erforderlich, für die dementsprechend eine eigene Druckgussform bereitzustellen ist.

Die wesentlichen Variationen der einzelnen Drosselvorrichtungen sind das Flanschbild, der Drosselklappendurchmesser und die luftfilterseitige Anschlussgeometrie im Ansaugtrakt. Daneben können von Hersteller zu Hersteller zusätzliche Anforderungen an die Drosselvorrichtung gestellt werden, so dass separate Anschlussstutzen am Gehäuse der Drosselvorrichtung vorzusehen und auszubilden sind.

### Stand der Technik

DE 43 29 522 A1 bezieht sich auf eine Drosseleinrichtung. Diese Drosseleinrichtung umfasst ein Gehäuse, eine Drosselklappenansteuerung, einen Stellungssensor sowie eine an einer Drosselklappenwelle befestigte Drosselklappe. Die Drosseleinrichtung ist zwischen dem reinluftseitigen Luftfilteranschluss und der Sauganlage der Brennkraftmaschine angeordnet. Der Luftfilteranschluss und/oder die Sauganlage bestehen aus einem Kunststoffmaterial, wobei die einzelnen Elemente der Drosseleinrichtung als Module aufgebaut sind, welche miteinander steckbar, schraubbar oder spannbar verbunden sind. Gehäuse und Drosselklappe können aus Kunststoff bestehen, wobei die Drosselklappenwelle insbesondere zweigeteilt ausgeführt ist und auf einer Wellenhälfte das Modul für den Lagesensor und auf der anderen Hälfte das Modul für die Drosselklappenverstelleinheit trägt.

DE 195 25 510 A1 hat eine Drosselklappenstelleinheit zum Gegenstand. Die Drosselklappenstelleinheit ist mit einer an einer in einem Drosselklappenstutzen drehbar gelagerten Drosselklappenwelle befestigten Drosselklappe versehen. Es ist ein Stellmotor zum Verstellen der Drosselklappenwelle vorgesehen, der mindestens einen Schleifer und mindestens eine Potentiometerbahn zum Erfassen einer Stellposition der Drosselklappenwelle enthält und einen elektrischen Anschluss aufweist, an dem in einem Anschlussraum der Stellmotor und das Potentiometer angeschlossen sind. Ferner ist dieser Anschlussraum durch einen Deckel abgeschlossen. Die mindestens eine Potentiometerbahn ist am Deckel angebracht, wobei am Deckel ein zum elektrischen Anschluss gehörendes Kupplungsteil angeformt ist. Am Deckel ist ferner mindestens ein Motorsteckkontakt vorgesehen, der bei an den Drosselklappenstutzen anmontierten Deckel in elektrischem Kontakt mit einem mit dem Stellmotor verbundenen Motorgegensteckkontakt steht.

DE 29 49 041 B1 betrifft eine Heizung zur Gemischaufbereitung bei Gemischbildnern. Zwischen einem Hauptdrosselglied und einer Kraftstoffzuteilungseinrichtung ist innerhalb der Rohrwandung über einen Teil von deren Längserstreckung ein als Wärmeaustauscherdoppelwandung ausgebildeter ringförmiger Heißwasserraum angeordnet. An einem Ende weist dieser einen Wasserzulaufstutzen und an einem anderen Ende einen Wasserablaufstutzen auf. Der Wärmeaustauscher ist über ein thermisch gesteuertes, ab höheren Temperaturen öffnendes Zuschaltventil mit einem Kühlwasserkreislauf verbunden. Die an den Hauptstrompfad des Gemischbildners angrenzende Innenwandung des Wärmeaustauschers besteht aus einem elektrischen Heizwiderstandsmaterial und ist über ein in Abhängigkeit von der Kühlwassertemperatur thermisch gesteuertes, ab einer bestimmten höheren Wassertemperatur öffnendes, elektrisches Schaltglied mit einer Spannungsquelle elektrisch verbunden.

Aus WO 95/02493 (EP 0 668 816 B1) schließlich ist ein aus Kunststoff bestehender Formkörper bekannt. Dieser Formkörper wird insbesondere im Spritzgussverfahren als Drosselklappengehäuse hergestellt. Dieses umfasst eine Wandung, die mit einer Innenwandfläche einen Hohlraum begrenzt. In der Wandung ist zumindest ein an der dem Hohlraum zugewandten Innenwandfläche von Kunststoffmaterial bedecktes Einlegeteil angeordnet. Das Einlegeteil verläuft gegenüber einer senkrecht zur Längsachse gerichteten Normalebene geneigt unter einem Neigungswinkel. Der Neigungswinkel des Einlegeteils gegenüber der Normalebene beträgt zwischen 4° und 8°. Das Einlegeteil wird aus Metall geformt, wobei es sich insbesondere um ein geformtes Blech handelt. Dieses umfasst eine obere Blechebene und eine untere Blechebene, wobei wenigstens ein Abschnitt aus einer der Blechebenen herausgebogen ist. Das Einlegeteil kann mit Verformungen, insbesondere mit dieses durchsetzenden Öffnungen versehen werden.

WO 96/07 041 bezieht sich auf eine Drosseleinrichtung. Diese Drosseleinrichtung umfasst zwei als Spritzgussbauteil gefertigte Gehäuseteile zwischen denen eine Drosselklappeanordnung angeordnet ist. Beide Gehäuseteile enthalten konturierte Luftkanäle.

Den vorgestellten Lösungen aus dem Stand der Technik haftet allesamt der Nachteil an, dass sie stets genau für einen Verbrennungskraftmaschinentyp ausgelegt und somit nur an dieser einsetzbar sind.

### Darstellung der Erfindung

Mit der erfindungsgemäß vorgeschlagenen Lösung, eine Drosselvorrichtung für eine Verbrennungskraftmaschine unter Einschluss von austauschbaren ersten und zweiten Gehäuseteilen zu schaffen, wird einerseits die Variantenvielzahl drastisch eingeschränkt und andererseits können in entsprechendem Maße Werkzeugkosten zur Herstellung der Drosselvorrichtungen eingespart werden.

Ein Basisgehäuse für Drosselvorrichtungen kann jedoch für eine Vielzahl von Drosselvorrichtungen eingesetzt werden, wenn die Funktionen Luftfilteranschluss und Flanschbildvarianz zur Verbrennungskraftmaschine in separate erste bzw. zweite Gehäuseteile verlegt werden. Das Basisgehäuse kann als Kunststoffspritzgießbauteile im Spritzgießverfahren gefertigt werden. Die entsprechenden Werkzeuge, d.h. die Kunststoffspritzgießformen haben eine 6-fach höhere Standzeit (ca. 1 Mill. Gehäuse), verglichen mit Aluminiumdruckgussformen. Dadurch wird der Nachteil höherer Gestehungskosten für Kunststoffspritzgießwerkzeuge bei weitem aufgewogen, da das Basisgehäuse in Großserie mit einem Werkzeug gefertigt werden kann.

Die Varianz des Basisgehäuses kann mit ebenfalls im Kunststoffspritzgießverfahren gefertigten ersten und zweiten Gehäuseteilen erhöht werden, wobei die ersten und zweiten Gehäuseteile auch aus einem anderen Material als Kunststoff, zum Beispiel aus Metall gefertigt sein können.

Ein erstes Gehäuseteil kann so beschaffen sein, dass es als Gehäuseoberteil der Drosselvorrichtung dient, in welches ein Heißfilm-Luftmassen-Messer sehr einfach integriert werden kann. Mit dem genannten, als Gehäuseoberteil ausgebildeten ersten Gehäuseteil, kann die Variantenvielfalt hinsichtlich der Schnittstelle zum Luftfilter und der unterschiedlichen Flanschbilder, d.h. der Anordnung von Führungshülsen für Befestigungselemente, abgedeckt werden.

An einem zweiten Gehäuseteil lassen sich eine Wasserheizung und Unterdruckanschlüsse aufnehmen. Dieses zweite Gehäuseteil kann auch zur Modifikation des Luftkanals eingesetzt werden, so zum Beispiel kann durch Integration eines S-Kanals eine optimale Luftführung stromab der Drosselvorrichtung im Ansaugtrakt erzielt werden. Das zweite Gehäuseteil lässt sich verdrehen, so dass dieses universell eingesetzt werden kann. Durch einfaches Verdrehen des Bauteils relativ zum Basisgehäuse können die angeordneten Stutzen bzw. Bohrungen in ihrer Umfangslage entsprechend zu den Anschlusselementen ausgerichtet werden, wobei die Leitungsanschlüsse in ihrer optimalen, kürzeste Leitungsverläufe zulassenden Länge ausgebildet werden können. Damit kann die erforderliche Variantenzahl weiter reduziert werden.

Das universell einsetzbare Basisgehäuse wird im allgemeinen mit ersten und zweiten Gehäuseteilen eingesetzt, die mit Flanschbildern von 50 x 50 mm bzw. 60 auf 60 mm versehen sind, wobei die eingesetzten Drosselklappendurchmesser zwischen 40 und 48 mm liegen.

### Zeichnung

Anhand der Zeichnung wird die Erfindung nachstehend eingehender beschrieben.

Es zeigt:
- Figur 1: eine Explosionsdarstellung eines Basisgehäuses mit erstem und zweitem Gehäuseteil,
- Figur 2: die Ansicht des zweiten Gehäuseteils in vergrößertem Maßstab,
- Figur 3: die Explosionszeichnung eines Basisgehäuses größeren Durchmessers mit einem ersten und einem zweiten Gehäuseteil eines zur Figur 1 unterschiedlichen Flanschbildes,
- Figur 4: das zweite Gehäuseteil gemäß der Darstellung in Figur 3 in vergrößerter Wiedergabe,
- Figur 4.1: die schematische Darstellung eines S-förmigen Kanals,
- Figur 5: das erste Gehäuseteil in hoher Ausführung in einer Drosselvorrichtung in perspektivischer Draufsicht und
- Figur 6: das erste Gehäuseteil gemäß Figur 5 in Seitenansicht.

### Ausführungsvarianten

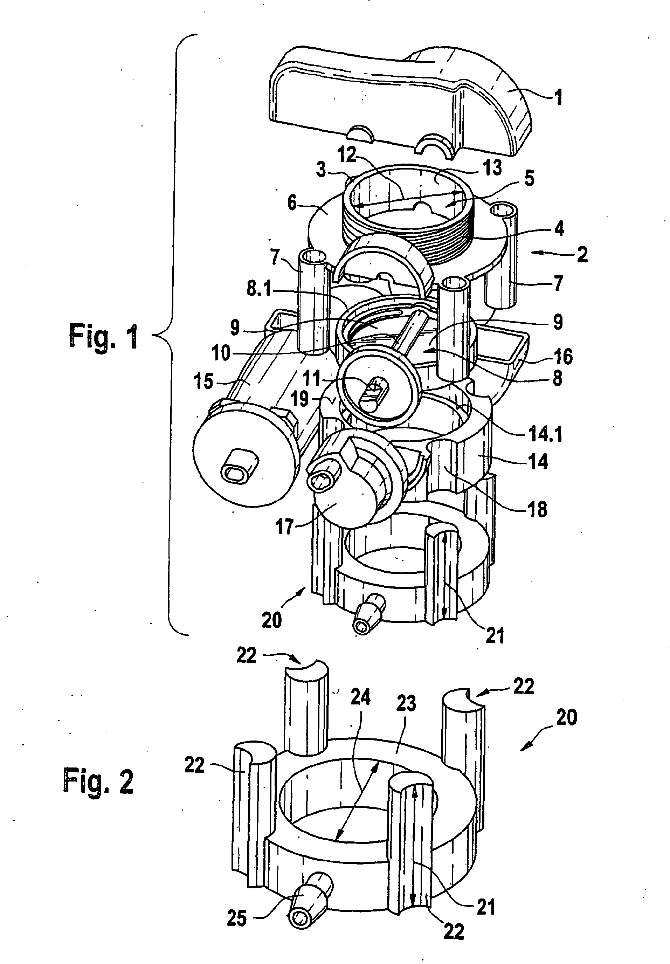

Figur 1 ist die Explosionszeichnung einer Drosselvorrichtung zu entnehmen, die ein Basisgehäuse sowie ein erstes und zweites Gehäuseteil umfasst.

Das erste Gehäuseteil 2 einer Drosselvorrichtung umfasst einen Drosselstutzen 3. Das erste Gehäuseteil 2 (niedrige Bauhöhe) wird auch als Gehäuseoberteil bezeichnet. Der Drosselstutzen 3 des ersten Gehäuseteils 2 ist mit einem Außengewinde 4 versehen, wobei der Drosselstutzen 3 einen Strömungsquerschnitt 5 umschließt. Unterhalb des Außengewindes 4 des Drosselstutzens 3 umfasst das erste Gehäuseteil 2 einen tellerförmig konfigurierten Bereich 6, von welchem sich in der Ausführungsvariante gemäß Figur 1 vier jeweils um 90° zueinander versetzt am tellerförmigen Element 6 ausgestaltete Führungshülsen 7 parallel zum Strömungsquerschnitt 5 erstrecken. Anstelle von vier über die Fläche des tellerförmigen Elementes 6 angeordneten Führungshülsen 7 können diese auch um 120° zueinander versetzt in diesem aufgenommen sein. In der in Figur 1 dargestellten Ausführungsvariante ist der Drosselstutzen 3 des ersten Gehäuseteils 2 in einem ersten Innendurchmesser 12 ausgebildet.

Unterhalb des ersten Gehäuseteils (niedrige Bauform) 2 befindet sich ein Basisgehäuse 14. Das Basisgehäuse 14 gemäß der Darstellung in Figur 1 umfasst eine Anlagefläche 14.1, in welche eine Drosselklappenanordnung 8 eingelegt werden kann. Die Drosselklappenanordnung 8 umfasst eine Klappenwelle 10, an der beidseits symmetrisch zueinander Klappenflügel 9 ausgebildet sind. Die Klappenflügel 9 sind von einer Einfassung 8.1 umgeben, die ihrerseits an der Anlagefläche 14.1 des Basisgehäuses 14 anliegt. Anstelle der hier dargestellten einlegbaren Drosselklappenanordnung 8 können auch andere Drosselklappenanordnungen 8 in geringerem Drosselklappendurchmesser in das Basisgehäuse 14 eingelegt werden. An ihrem einen Ende umfasst die Klappenwelle 10 eine Abflachung 11 zur Aufnahme von Sensorelementen. Im montierten Zustand der Drosselklappenanordnung 8 im Basisgehäuse 14 werden die hier nicht dargestellten, an der Abflachung 11 der Klappenwelle 10 aufnehmbaren Sensorelemente von einem Sensorikgehäuse 17 umschlossen, welches mit einem Steckeranschluss versehen ist. Am Basisgehäuse 14 gemäß der Darstellung in Figur 1 ist zudem ein Gehäuseabschnitt ausgebildet, welches einen Stellantrieb 15 aufnimmt. Der Stellantrieb - bevorzugt als Elektromotor ausgebildet - wird in das angespritzte Gehäuse am Basisgehäuse 14 eingeschoben und ragt mit seinem hier nicht dargestellten Antriebselement in eine Gehäuseunterschale 16 hinein, welche am Basisgehäuse 14 angespritzt ist. Die Unterschale 16 kann von einer Oberschale 1 verschlossen werden, so dass die die Drosselklappenanordnung 8 betätigbaren Antriebselemente nach außen abgedichtet sind.

An der Umfangsfläche des Basisgehäuses 14 sind über den Umfang verteilt einzelne Ausnehmungen 18 angeordnet, welche als Anlageflächen für die Führungselemente 7 des ersten Gehäuseteils 2 dienen. Am Basisgehäuse 14 ist eine plane Stirnfläche 19 ausgebildet, auf welcher das erste Gehäuseteil 2 mit einer hier nicht dargestellten Planfläche dichtend aufliegt, so dass die in das Basisgehäuse 14 eingelegte Drosselklappenanordnung 8 an der Anlagefläche 14.1 fixiert ist.

Unterhalb des Basisgehäuses 14 ist ein zweites Gehäuseteil 20 dargestellt. Das zweite Gehäuseteil 20 umfasst zur Lage der Führungshülsen 7 des ersten Gehäuseteils 2 korrespondierende Stege, die in einer Höhe 21 ausgebildet sind. Die an der Umfangsfläche des zweiten Gehäuseteils 20 ausgebildeten Stege können mit einer Fläche an den Ausnehmungen 18 am Umfang des Basisgehäuses 14 anliegen und mit ihrer, den vier Führungshülsen 7 des ersten Gehäuseteils 2 zuweisenden Fläche eine Führungsfläche für die Führungshülsen 7 des ersten Gehäuseteils 2 bilden.

Figur 2 zeigt die Ansicht des zweiten Gehäuseteils in vergrößertem Maßstab.

Das zweite Gehäuseteil 20 umfasst einen Ringraum 23, in welchem ein Hohlraum gebildet ist. In diesen Hohlraum kann ein Heizmedium, sei es Wasser oder Luft, über einen Anschlussstutzen 25 einströmen, um das zweite Gehäuseteil 20 der Drosselvorrichtung über seinen gesamten Umfang zu beheizen. Der Ringraum 23 ist in einem Innendurchmesser 24 ausgebildet. Am Umfang des Ringraumes 23 befinden sich vier stegförmige Führungsabschnitte, deren Höhe mit Bezugszeichen 21 gekennzeichnet ist. An der den Führungshülsen 7 des ersten Gehäuseteils 2 zuweisenden Seite sind die Führungsabschnitte mit einer Rundung 22 versehen. Die Rundung 22 korrespondiert zur Rundung der Führungshülsen 7 am ersten Gehäuseteil 2, wobei die Führungsabschnitte so ausgebildet sind, dass sie in die Ausnehmungen 18 am Umfang des Basisgehäuses 14 einführbar sind.

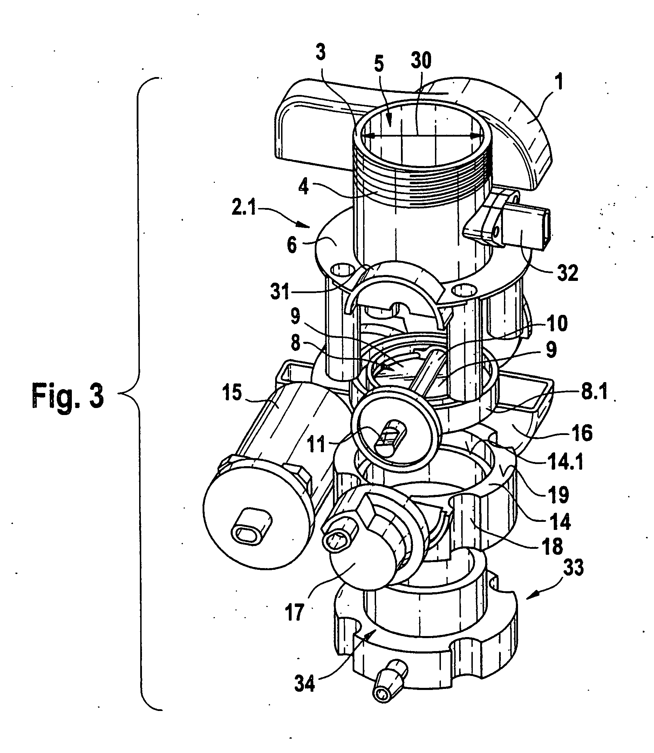

Figur 3 ist eine Explosionsdarstellung eines Basisgehäuses größeren Durchmessers mit einem ersten und einem zweiten Gehäuseteil entnehmen.

Analog zur Darstellung gemäß Figur 1 umfasst die Drosselvorrichtung, welche ähnlich modular aufgebaut ist wie die in Figur 1 dargestellte Drosselvorrichtung, ein erstes Gehäuseteil 2.1, ein Basisgehäuse 14, eine in diese einlegbare Drosselklappenanordnung 8 sowie ein zweites Gehäuseteil 33.

Im Unterschied zur Explosionszeichnung einer Drosselvorrichtung gemäß Figur 1 ist der Drosselstutzen 3 des ersten Gehäuseteils 2.1 (höhere Bauform) in einem zweiten Durchmesser 30 ausgebildet, welcher größer bemessen ist als der erste Durchmesser 12 des Drosselstutzens 3 des ersten Gehäuseteils 2 (niedrige Bauform) gemäß der Variante in Figur 1. Auch das mit Bezugszeichen 14 bezeichnete Basisgehäuse unterscheidet sich von dem Basisgehäuse 14 gemäß der Darstellung in Figur 1 nicht. Ferner umfasst das erste Gehäuseteil 2.1 (hohe Bauform) einen Anschlussstecker 32 für einen Heißfilm-Luftmengen-Messer (HFM). Am ersten Gehäuseteil 2.1 ist eine Umrandung 31 ausgebildet, welche das mit einem scheibenförmigen Element versehene Ende der Klappenwelle 10 umschließt, an welchem eine Abflachung 11 zur Ausnahme von Drehsensoren ausgebildet ist.

Die Drosselklappenanordnung 8 mit zwei sich symmetrisch zur Klappenwelle 10 erstrekkenden Flügelbereichen 9 ist von einer Einfassung 8.1 umgeben, mit welcher die Drosselklappenanordnung 8 an einer Anlagefläche 14.1 des Basisgehäuses 14 anliegt. Daneben umfasst das Basisgehäuse 14 ein angespritztes Gehäuse, in welchem ein Stellantrieb 15 aufgenommen ist. Analog zur Darstellung des Basisgehäuses 14 gemäß der Darstellung in Figur 1 sind die die Drosselklappenanordnung 8 antreibenden Antriebselemente von einer Unterschale 16 und einer auf diese montierbaren Oberschale 1 gegen die Umgebung abgedichtet. Am Umfang des Basisgehäuses 14 sind mit ihrer Rundung korrespondierend zum Durchmesser der Führungshülsen 7 ausgebildete Ausnehmungen 18 vorgesehen.

Unterhalb des Basisgehäuses 14 ist ein zweites Gehäuseteil 33 ausgebildet, an welchem ein Übergangsbereich 34 angeformt ist.

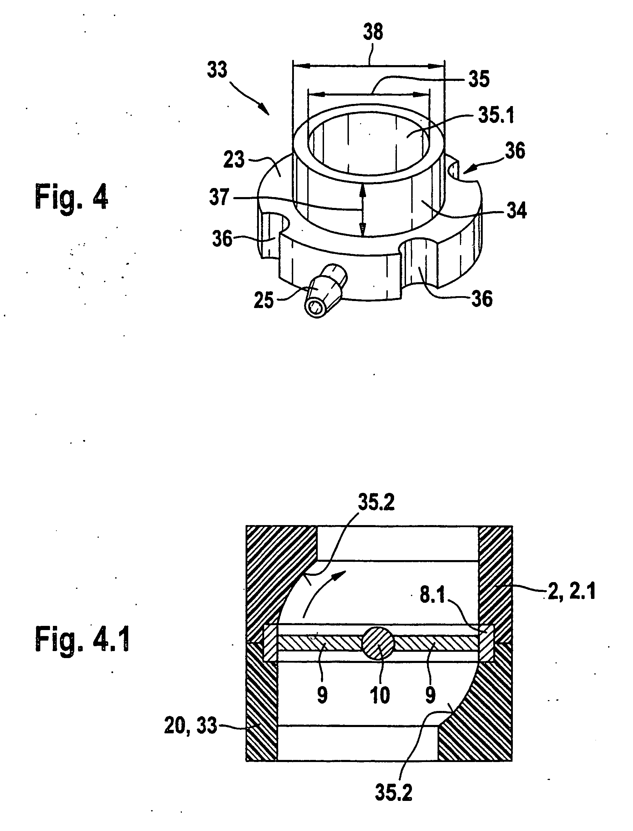

Der Darstellung gemäß Figur 4 ist die Ausgestaltung des zweiten Gehäuseteils gemäß der Darstellung in Figur 3 in vergrößertem Maßstab zu entnehmen.

Das zweite Gehäuseteil 33 kann einen ringförmigen Abschnitt 23 umfassen, der einen Hohlraum begrenzt, der wiederum durch Einleiten eines Heizmediums über den Anschlussstutzen 25 - sei es erwärmtes Wasser oder erwärmte Luft - beheizbar ist. In die Außenumfangsfläche des Ringraums 23 des zweiten Gehäuseteils 33 sind einzelne, als Rundungen beschaffene Ausnehmungen 36 ausgebildet. Diese Ausnehmungen 36 sind in ihrer Rundung korrespondierend zum Außendurchmesser der Führungshülsen 7 des ersten Gehäuseteils 2.1 ausgeführt, so dass sich diese an die Rundungen 36 des zweiten Gehäuseteils 33 anschmiegen können. Das zweite Gehäuseteil 33 umfasst einen Übergangsbereich 34, welcher mit seinem Außendurchmesser 36 in das Innere des Strömungsquerschnittes des Basisgehäuses 14 einführbar ist und aufgrund seiner Wandstärke vorhandene Durchmessersprünge zu sich anschließenden Saugrohrbereichen im Ansaugtrakt einer Verbrennungskraftmaschine ausgleicht, d.h. der Durchmesseranpassung des Basisgehäuses 14 zur Abdeckung verschiedener Einsatzvarianten. Die Höhe 37 des Übergangsbereiches 34 ist so bemessen, dass das zweite Gehäuseteil 33 im Basisgehäuse 14 unterhalb von dessen Einfassung 14.1 für die Drosselklappenanordnung 8 anliegt. Der Innendurchmesser des zweiten Gehäuseteils 33 ist mit Bezugszeichen 35 gekennzeichnet. Der Innendurchmesser des in Figur 4 dargestellten zweiten Gehäuseteils 33 ist über die axiale Länge des zweiten Gehäuseteils 33 konstant ausgelegt, d.h. es ergibt sich ein zylindrisch konfigurierter Luftführungskanal im zweiten Gehäuseteil 33, welcher der Verbrennungskraftmaschine zuweist.

In einer Ausführungsvariante der Innenwandung des zweiten Gehäuseteils 33 kann die Innenwandung auch als eine konturierte Wandung 35.2 (S-Kanal) beschaffen sein. Im zweiten Gehäuseteil 33, welches ebenfalls als ein Spritzgussbauteil gefertigt sein kann oder aus einem metallischen Werkstoff bestehen kann oder aus einer Kunststoff/Metallkombination gefertigt sein kann, wird die Innenwandung 35.2 S-förmig konfiguriert, so dass sich eine optimale Luftführung im der Drosselstelle nachgeschalteten Bereich ergibt. Wird die Wandung des zweiten Gehäuseteils 33 mit der in Figur 4.1 dargestellten Konturierung 35.2 versehen, lässt sich eine optimale Zufuhr, in strömungstechnischer Hinsicht betrachtet, der Verbrennungsluft zur Verbrennungskraftmaschine erreichen.

Die zweiten Gehäuseteile lassen sich insbesondere durch die Überdeckung des Übergangsbereiches 34, der als Durchmesserreduktion und der Führung des zweiten Gehäuseteils dient, am Basisgehäuse 14 verdrehen. Dadurch können beispielsweise bei Drehstufen von jeweils 90° unterschiedliche Orientierungen des Anschlussstutzens 25 in Bezug auf Anbaukomponenten eingestellt werden, so dass sich kürzeste Zuleitungen ergeben und weitere Varianten des zweiten Gehäuseteils 33 aufgrund verschiedener Anschlusslagen eingespart werden können.

Figur 4.1 zeigt eine schematische Darstellung eines S-Kanals.

An der Innenwandung mindestens eines der ersten bzw. zweiten Gehäuseteile 2, 2.1; 20, 33 kann eine Kontuierung 35.2 ausgebildet werden, um eine optimierte Luftführung nach der Drosselstelle zu erzielen. Die Drosselklappenanordnung 8, die je nach Kundenanforderung in mehreren Durchmessern gefertigt werden kann, ist in Darstellung gemäß Figur 4.1 zwischen erstem Gehäuseteil 2 bzw. 2.1 und zweitem Gehäuseteil 20 bzw. 33 gezeigt. Die S-förmig verlaufende Wandkonturierung 35.2 kann auch lediglich in der Wandung des zweiten Gehäuseteils 20 bzw. 33 ausgebildet sein, um den Strömungsquerschnitt für die angesaugte Luftmenge der Verbrennungskraftmaschine zu optimieren.

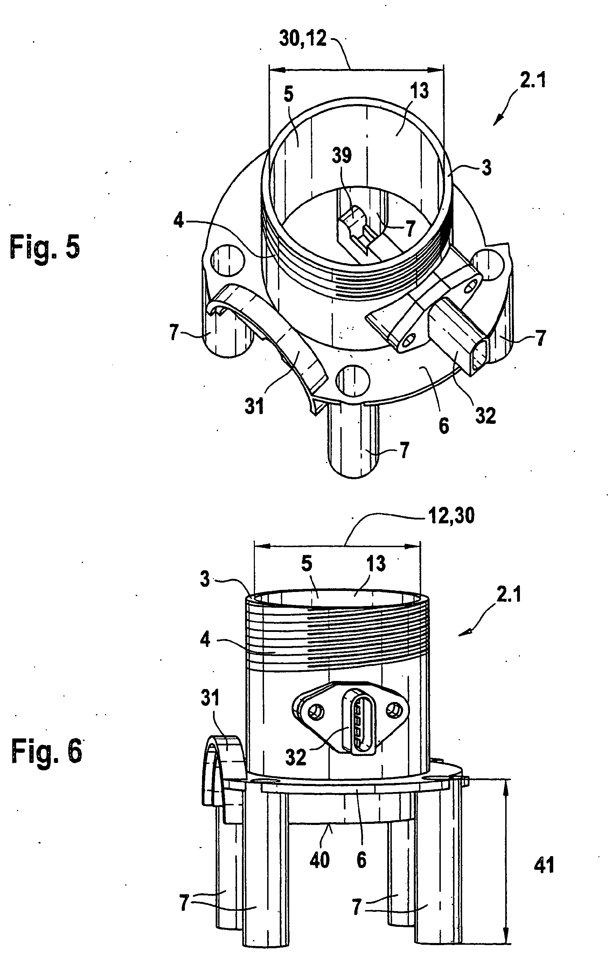

Figur 5 zeigt das erste Gehäuseteil (hohe Bauform) mit integrierter HFM-Funktion in perspektivischer Draufsicht.

Aus dieser Darstellung geht hervor, dass in den Drosselstutzen 3 des ersten Gehäuseteils 2.1 eine HFM-Komponente 39 eingelassen ist. Die von dieser Komponente 39 aufgenommenen Meßsignale werden über eine am Anschlußstecker 32 angeschlossene Signalleitung an das Steuergerät der Verbrennungskraftmaschine weitergegeben. Dort erfolgt eine laufende Berechnung und Überwachung der im Ansaugtrakt einer Verbrennungskraftmaschine jeweils angesaugten Luftmenge. Am Außenumfang des Drosselstutzens 3 des ersten Gehäuseteils 2.1 ist ein Außengewinde 4 vorgesehen, mit welchem die die Gehäusekomponenten 2.1, 14 und eingelegter Drosselklappenanordnung 8 sowie zweitem Gehäuseteil 33 umfassende Drosselvorrichtung im Ansaugtrakt einer Verbrennungskraftmaschine eingebaut wird.

Der Innendurchmesser des Drosselstutzens 3, der den freien Strömungsquerschnitt 5 bestimmt, kann dabei im ersten Durchmesser 12 bzw. im zweiten Durchmesser 30 ausgebildet sein, je nach Variante. Generell kommen Drosselvorrichtungen zum Einsatz, die einen Innendurchmesser zwischen 40 und 48 mm aufweisen. Das erste Gehäuseteil 2, 2.1, welches die Funktion einer Schnittstelle zum luftfilterseitigen Ende des Ansaugtraktes einer Verbrennungskraftmaschine übernimmt, umfasst ein tellerförmiges Element 6, dessen Grundfläche in der Größenordnung zwischen 50 x 50 mm bzw. 60 x 60 mm, d.h. in verschiedenen Flanschbildern, ausgebildet ist und die luftfilterseitige Schnittstelle bildet. Im tellerförmigen Element 6, an welchem bei Ausgestaltung des ersten Gehäuseteils 2, 2.1 als Kunststoffspritzgießteil 4 einander gegenüberliegende Führungshülsen 7 angespritzt sein können, ist ein gebogener Bereich 31 ausgebildet. Der gebogene Bereich 31 bildet die Umrandung eines scheibenförmigen Elementes, welches an der Klappenwelle 10 der Drosselanordnung 8 gemäß der in Figur 1 bzw. Figur 3 dargestellten Ausführungsvarianten angespritzt sein kann. Die Führungshülsen 7 erstrecken sich vom tellerförmig konfigurierten Bauteil 6 parallel zum Strömungsquerschnitt 9 des ersten Gehäuseteils 2.1. Neben einer Integration einer HFM-Komponente 39 in das Innere des Strömungsquerschnitts 5 des ersten Gehäuseteils 2.1 kann an diesem auch eine Tankentlüftung vorgesehen sein.

Figur 6 zeigt das oberhalb eines Basisgehäuses angeordnete erste Gehäuseteil 2.1 in seiner Seitenansicht.

Wie im Zusammenhang mit der Beschreibung von Figur 5 bereits erwähnt, kann das erste Gehäuseteil 2.1 einen ersten Innendurchmesser 12 bzw. einen zweiten Innendurchmesser 30 aufweisen, welche den freien Strömungsquerschnitt 5 am Drosselstutzen 3 bestimmen. Unterhalb eines Außengewindeabschnittes 4 am Drosselstutzen 3 befindet sich ein Steckeranschluss 32 für die HFM-Komponente 39 innerhalb des Drosselstutzens 3.

Unterhalb des tellerförmigen Elementes 6 ist eine Planfläche 40 ausgebildet, mit welcher das erste Gehäuseteil 2.1 (hohe Bauform) auf die zugehörige, korrespondierende Stirnfläche 19 des Basisgehäuses 14 aufgelegt wird, nachdem in dieses zuvor die Drosselklappenanordnung 8 - als modulares Bauelement - eingelassen wird. Entsprechend ihrer Höhe 41 verlaufen die Führungshülsen 7 des ersten Gehäuseteils 2.1 entlang des Basisgehäuses 14 und fluchten entweder unmittelbar in die an dessen Außenumfangsfläche vorgesehenen Ausnehmungen 18 oder in Ausnehmungen, d.h. Rundungen 22 an den vier Führungsabschnitten des zweiten Gehäuseteils 20, gemäß der Darstellung in Figur 2 oder an Rundungen 36 im Ringraumbereich 23 des zweiten Gehäuseteils 33 (reduzierter Durchmesser) gemäß der Darstellung in Figur 4.

Dank des modularen Aufbaus der erfindungsgemäß vorgeschlagenen Drosselvorrichtung können auf die Anlageflächen 14.1 des Basisgehäuses 14 nach Figur 1 gemäß Figur 3 die zu deren Innendurchmesser korrespondierenden Drosselklappenanordnungen 8 eingelegt werden. Diese liegen mit ihrer jeweiligen Einfassung 18.1 auf den erwähnten Anlageflächen 14.1 auf. Daneben ist es möglich, in das Basisgehäuse 14 auch Drosselklappenanordnungen 8 mit kleinerem Klappendurchmesser einzubauen. Analog zu dieser Modulbauweise passt auf jedes Basisgehäuse 14 das erste Gehäuseteil 2 bzw. 2.1 mit seinem entsprechenden Flanschbild sowie solche erste und zweite Gehäuseteile 2, 2.1; 20, 33 mit größerem Flanschbild, d.h. 60 x 60 mm, um ein Beispiel zu nennen.

Bei ersten und zweiten Gehäuseteilen 2, 2.1; 20 bzw. 33, welche ein Flanschbild aufweisen, welches den Einsatz einer Drosselvorrichtung mit Basisgehäuse 14 an einem große Ansaugluftmengen benötigenden Verbrennungskraftmaschine ermöglichen, liegen die Führungshülsen 7 weiter nach außen verschoben, so dass am Basisgehäuse 14 die entsprechenden, im Flanschbild passenden zweiten Gehäuseteile 20 bzw. 33 zum Einsatz kommen. Das verwendete Basisgehäuse 14 ist jedoch stets von gleicher Beschaffenheit, wobei in dieses mit unterschiedlichen Durchmessern ausgebildeten Drosselklappenanordnungen 8 einlegbar sind. Die Anpassung der Strömungsquerschnitte erfolgt in diesem Falle durch Einsatz eines zweiten Gehäuseteils 33 mit durchmesserreduzierendem Übergangsbereich 34, bezogen auf den freien Strömungsquerschnitt 5.

### Bezugszeichenliste

- 1: Oberschale
- 2: erstes Gehäuseteil (niedrige Bauform)
- 2.1: erstes Gehäuseteil (hohe Bauform)
- 3: Drosselstutzen
- 4: Außengewinde
- 5: Strömungsquerschnitt
- 6: Teller
- 7: Führungshülse
- 8: Drosselklappenanordnung
- 8.1: Einfassung
- 9: Klappenflügel
- 10: Klappenwelle
- 11: Abflachung für Sensorelemente
- 12: erster Durchmesser
- 13: Innenwandung
- 14: Basisgehäuse
- 14.: Anlagefläche
- 15: Stellantrieb
- 16: angespritzte Unterschale
- 17: Sensorikgehäuse
- 18: Ausnehmung
- 19: Stirnfläche
- 20: zweites Gehäuseteil (mit Stegen)
- 21: Höhe
- 22: Rundung
- 23: Ringraum
- 24: Innenwandung
- 25: Anschlußstutzen

- 30: zweiter Durchmesser
- 31: Umrandung
- 32: Anschlußstecker HFM
- 33: zweites Gehäuseteil (flache Ausführung)
- 34: Übergangsstück
- 35: Innendurchmesser
- 35.1: Glattwandung
- 35.2: konturierte Wandung (S-Kanal)
- 36: Rundung
- 37: Übergangsbereichhöhe
- 38: Außendurchmesser
- 39: HFM-Komponente
- 40: Kontaktfläche
- 41: Führungshülsenhöhe

## Patentansprüche

1. Drosselvorrichtung für den Ansaugtrakt einer Verbrennungskraftmaschine, wobei die Drosselvorrichtung eingerichtet ist, um in einer Vielzahl von Verbrennungskraftmaschinen eingesetzt zu werden, wobei die Drosselvorrichtung ein mehrteiliges Gehäuse umfasst, mit
- ersten Gehäuseteilen (2.1), wobei die ersten Gehäuseteile als ansaugseitige, an unterschiedliche Flanschbilder anpassbare Schnittstelle ausgestaltet sind, und
- zweiten Gehäuseteilen (20, 33), wobei die zweiten Gehäuseteile (20, 33) zur Modifikation der Luftführung eingerichtet sind,
**dadurch gekennzeichnet, dass** weiterhin ein Basisgehäuse (14) vorgesehen ist, wobei das Basisgehäuse (14) als Spritzgussbauteil gefertigt ist, wobei das Basisgehäuse (14) Verbrennungskraftmaschinen-invariant ausgestaltet ist, wobei eine mittels eines Stellantriebes (15) betätigbare Drosselklappenanordnung (8) in dem Basisgehäuse (14) aufgenommen ist, wobei in das Basisgehäuse (14) die dessen Innendurchmesser (12, 30) entsprechende Drosselklappenanordnung (8) sowie die Drosselklappenanordnung (8) mit kleinerem Durchmesser einlegbar ist, und wobei die ersten Gehäuseteile (2.1) und die zweiten Gehäuseteile (20, 33) an dem Basisgehäuse (14) aufgenommen sind.

2. Drosselvorrichtung gemäß Anspruch 1, **dadurch gekennzeichnet, dass** die ersten (2, 2.1) und die zweiten Gehäuseteile (20, 33) als Kunststoffspritzgussteile ausgebildet sind.

3. Drosselvorrichtung gemäß Anspruch 1, **dadurch gekennzeichnet, dass** die ersten (2, 2.1) und die zweiten Gehäuseteile (20, 33) aus metallischem Werkstoff bestehen.

4. Drosselvorrichtung gemäß Anspruch 1, **dadurch gekennzeichnet, dass** in ein erstes Gehäuseteil (2.1) eine Heißfilm-Luftmassen-Messer-Komponente (39) integriert ist.

5. Drosselvorrichtung gemäß Anspruch 1, **dadurch gekennzeichnet, dass** die ersten Gehäuseteile (2, 2.1) Führungshülsen (7) umfassen, die sich von einem plattenförmigen Abschnitt (6) parallel zur Strömungsrichtung des Luftstromes durch einen Strömungsquerschnitt (5) erstrecken.

6. Drosselvorrichtung gemäß Anspruch 1, **dadurch gekennzeichnet, dass** an den ersten Gehäuseteilen (2, 2.1) eine Tankentlüftungseinheit angeordnet ist.

7. Drosselvorrichtung gemäß Anspruch 1, **dadurch gekennzeichnet, dass** die Drosselklappenanordnung (8) eine Einfassung 8.1 umfasst, die an einer Anlagefläche (14.) im Basisgehäuse (14) anliegt.

8. Drosselvorrichtung gemäß Anspruch 1, **dadurch gekennzeichnet, dass** das Basisgehäuse (14) und/oder die zweiten Gehäuseteile (20, 33) einen zylindrisch geformten Luftkanal (35.1) enthalten.

9. Drosselvorrichtung gemäß Anspruch 1, **dadurch gekennzeichnet, dass** das Basisgehäuse (14) und/oder die zweiten Gehäuseteile (20, 33) einen konturierten Luftkanal (35.2) enthalten.

10. Drosselvorrichtung gemäß Anspruch 1, **dadurch gekennzeichnet, dass** das Basisgehäuse (14) oder die zweiten Gehäuseteile (20, 33) Bestandteile des Ansaugtraktes einer Verbrennungskraftmaschine sind.

11. Drosselvorrichtung gemäß Anspruch 1, **dadurch gekennzeichnet, dass** das Basisgehäuse (14) und/oder die zweiten Gehäuseteile (20, 33) Anschlüsse (25) für einen beheizbaren Gehäuse/Adapterteil (23) aufweisen.

12. Drosselvorrichtung gemäß Anspruch 1, **dadurch gekennzeichnet, dass** die zweiten Gehäuseteile (20, 33) angeformte Übergangsbereiche (34) umfassen, mit deren Innendurchmesser (35) bzw. Außendurchmesser (38) Durchmesserdifferenzen zwischen Basisgehäuse (14) und Saugrohr ausgleichbar sind.

13. Drosselvorrichtung gemäß Anspruch 5, **dadurch gekennzeichnet, dass** am Basisgehäuse (14) die ersten Gehäuseteile (2, 2.1) aufnehmbar sind, deren Führungshülsen (7) zu Ausnehmungen (18, 22, 33) des Basisgehäuses (14) und den zweiten Gehäuseteilen (20, 33) korrespondieren.

14. Drosselvorrichtung gemäß einem oder mehrerer der vorhergehenden Ansprüche, **dadurch gekennzeichnet, dass** am Basisgehäuse (14) erste Gehäuseteile (2, 2.1) im passendem Flanschbild sowie in jedem größeren Flanschbild aufnehmbar sind.

15. Drosselvorrichtung gemäß einem der vorhergehenden Ansprüche, **dadurch gekennzeichnet, dass** die zweiten Gehäuseteile (20, 33) ausrichtbar am Basisgehäuse (14) montiert sind.

16. Drosselvorrichtung gemäß dem vorhergehenden Anspruch, **dadurch gekennzeichnet, dass** die zweiten Gehäuseteile (20, 33) in mindestens drei verschiedenen Winkelstellungen zum Basisgehäuse (14) montierbar sind.

## Claims

1. Throttle apparatus for the intake section of an internal combustion engine, the throttle apparatus being set up to be used in a multiplicity of internal combustion engines, the throttle apparatus comprising a multiple-part housing, having
- first housing parts (2.1), the first housing parts being configured as an intake-side interface which can be adapted to different flange designs, and
- second housing parts (20, 33), the second housing parts (20, 33) being set up to modify the air guidance,
**characterized in that**, furthermore, a basic housing (14) is provided, the basic housing (14) being manufactured as an injection-moulded component, the basic housing (14) being configured such that it is standardized for internal combustion engines, a throttle-flap arrangement (8) which can be actuated by means of an actuating drive (15) being accommodated in the basic housing (14), it being possible for the throttle-flap arrangement (8) which corresponds to the internal diameter (12, 30) of the basic housing (14) and for the throttle-flap arrangement (8) with a smaller diameter to be inserted into the said basic housing (14), and the first housing parts (2.1) and the second housing parts (20, 33) being received on the basic housing (14).

2. Throttle apparatus according to Claim 1, **characterized in that** the first housing parts (2, 2.1) and the second housing parts (20, 33) are configured as plastic injection-moulded parts.

3. Throttle apparatus according to Claim 1, **characterized in that** the first housing parts (2, 2.1) and the second housing parts (20, 33) are composed of metallic material.

4. Throttle apparatus according to Claim 1, **characterized in that** a hot-film air mass flow rate meter component (39) is integrated into a first housing part (2.1).

5. Throttle apparatus according to Claim 1, **characterized in that** the first housing parts (2, 2.1) comprise guide sleeves (7) which extend from a plate-shaped section (6) through a flow cross section (5) parallel to the flow direction of the air flow.

6. Throttle apparatus according to Claim 1, **characterized in that** a tank ventilating unit is arranged on the first housing parts (2, 2.1).

7. Throttle apparatus according to Claim 1, **characterized in that** the throttle-flap arrangement (8) comprises a frame 8.1 which bears against a bearing face (14.) in the basic housing (14).

8. Throttle apparatus according to Claim 1, **characterized in that** the basic housing (14) and/or the second housing parts (20, 33) contain a cylindrically shaped air channel (35.1).

9. Throttle apparatus according to Claim 1, **characterized in that** the basic housing (14) and/or the second housing parts (20, 33) contains/contain a contoured air channel (35.2).

10. Throttle apparatus according to Claim 1, **characterized in that** the basic housing (14) or the second housing parts (20, 33) is/are constituent parts of the intake section of an internal combustion engine.

11. Throttle apparatus according to Claim 1, **characterized in that** the basic housing (14) and/or the second housing parts (20, 33) has/have connections (25) for a heatable housing/adapter part (23).

12. Throttle apparatus according to Claim 1, **characterized in that** the second housing parts (20, 33) comprise integrally formed transition regions (34), by way of the internal diameter (35) or external diameter (38) of which diameter differences can be equalized between the basic housing (14) and the intake manifold.

13. Throttle apparatus according to Claim 5, **characterized in that** the first housing parts (2, 2.1) can be received on the basic housing (14), the guide sleeves (7) of which first housing parts (2, 2.1) correspond to recesses (18, 22, 33) of the basic housing (14) and the second housing parts (20, 33).

14. Throttle apparatus according to one or more of the preceding claims, **characterized in that** first housing parts (2, 2.1) can be received on the basic housing (14) in the fitting flange design and in any larger flange design.

15. Throttle apparatus according to one of the preceding claims, **characterized in that** the second housing parts (20, 33) are mounted on the basic housing (14) such that they can be aligned.

16. Throttle apparatus according to the preceding claim, **characterized in that** the second housing parts (20, 33) can be mounted in at least three different angular positions with respect to the basic housing (14).

## Revendications

1. Dispositif d'étranglement pour la conduite d'admission d'un moteur à combustion interne selon lequel le dispositif d'étranglement est conçu pour être utilisé dans un grand nombre de moteurs à combustion interne, le dispositif d'étranglement ayant un boîtier en plusieurs parties comprenant :
- des premières parties de boîtier (2.1), ces premières parties de boîtier étant réalisées sous la forme d'interfaces adaptables côté admission, à différentes structures de bride, et
- des secondes parties de boîtier (20, 33), ces secondes parties de boîtier (20, 33) étant conçues pour modifier le guidage de l'air,
**caractérisé en ce qu'**
il est prévu en outre un boîtier de base (14), ce boîtier de base (14) étant réalisé sous la forme d'une pièce en fonte injectée,
le boîtier de base (14) est invariant pour les moteurs à combustion interne,
un dispositif de volet d'étranglement (8) commandé par un actionneur (15) est logé dans le boîtier de base (14),
le boîtier de base (14) reçoit le dispositif de volet d'étranglement (8) correspondant à son diamètre intérieur (12, 30) ainsi que le dispositif de volet d'étranglement (8) de diamètre plus petit, et
les premières parties de boîtier (2.1) et les secondes parties de boîtier (20, 33) sont logées dans le boîtier de base (14).

2. Dispositif d'étranglement selon la revendication 1,
**caractérisé en ce que**
les premières parties de boîtier (2, 2. 1) et les secondes parties de boîtier (20, 33) sont des pièces en matière plastique injectée.

3. Dispositif d'étranglement selon la revendication 1,
**caractérisé en ce que**
les premières parties de boîtier (2, 2. 1) et les secondes parties de boîtier (20, 33) sont en un matériau métallique.

4. Dispositif d'étranglement selon la revendication 1,
**caractérisé en ce qu'**
un composant de débitmètre massique d'air à film chaud (39) est intégré dans la première partie de boîtier (2.1).

5. Dispositif d'étranglement selon la revendication 1,
**caractérisé en ce que**
les premières parties de boîtier (2, 2.1) comportent des manchons de guidage (7) qui s'étendent d'un segment (6) en forme de plaques, parallèlement à la direction d'écoulement de la veine d'air à travers la section d'écoulement (5).

6. Dispositif d'étranglement selon la revendication 1,
**caractérisé par**
une unité de ventilation de réservoir montée sur les premières parties de boîtier (2, 2.1).

7. Dispositif d'étranglement selon la revendication 1,
**caractérisé en ce que**
le dispositif à volet d'étranglement (8) comporte un entourage (8.1) qui s'appuie contre une surface d'appui (14.1) du boîtier de base (14).

8. Dispositif d'étranglement selon la revendication 1,
**caractérisé en ce que**
le boîtier de base (14) et/ou les secondes parties de boîtier (20, 33) comportent un canal d'air (35.1) de forme cylindrique.

9. Dispositif d'étranglement selon la revendication 1,
**caractérisé en ce que**
le boîtier de base (14) et/ou les secondes parties de boîtier (20, 33) ont un canal d'air à contour (35.2).

10. Dispositif d'étranglement selon la revendication 1,
**caractérisé en ce que**
le boîtier de base (14) et la seconde partie de boîtier (20, 33) font partie de la conduite d'admission d'un moteur à combustion interne.

11. Dispositif d'étranglement selon la revendication 1,
**caractérisé en ce que**
le boîtier de base (14) et/ou les secondes parties de boîtier (20, 33) comportent des ajutages (25) pour un boîtier/pièce adaptée (23), susceptible d'être chauffé.

12. Dispositif d'étranglement selon la revendication 1,
**caractérisé en ce que**
les secondes parties de boîtier (20, 33) comportent des zones transitoires (34) mises en forme dont les diamètres intérieurs (35) ou diamètres extérieurs (38) permettent de compenser les différences de diamètre entre le boîtier de base (14) et la conduite d'admission.

13. Dispositif d'étranglement selon la revendication 5,
**caractérisé en ce que**
le boîtier de base (14) reçoit les premières parties de boîtier (2, 2.1) dont les manchons de guidage (7) correspondent aux cavités (18, 22, 33) du boîtier de base (14) et des secondes parties de boîtier (20, 33).

14. Dispositif d'étranglement selon les revendications précédentes,
**caractérisé en ce que**
le boîtier de base (14) reçoit les premières parties de boîtier (2, 2.1) suivant une forme de bride adaptée et pour toute forme de bride plus grande.

15. Dispositif d'étranglement selon les revendications précédentes,
**caractérisé en ce que**
les secondes parties de boîtier (20, 33) sont montées de manière alignée sur le boîtier de base (14).

16. Dispositif d'étranglement selon les revendications précédentes,
**caractérisé en ce que**
les secondes parties de boîtier (20, 33) peuvent être montées dans au moins trois positions angulaires différentes par rapport au boîtier de base (14).
